# EUROPÄISCHE PATENTSCHRIFT

(11) **EP 3 580 837 B1**
(45) Veröffentlichungstag und Bekanntmachung des Hinweises auf die Patenterteilung: **11.01.2023**
(21) Anmeldenummer: 18705860.7
(22) Anmeldetag: 08.02.2018
(51) Int. Cl.: H02K 7/18, B02C 4/42, B02C 21/02, B65G 23/22, B60K 6/12

(54) **ANTRIEBSEINRICHTUNG ZUR ENERGIEVERSORGUNG HOCHBELASTETER ELEKTROMOTOREN**
DRIVE DEVICE FOR SUPPLYING POWER TO HIGH-LOAD ELECTRIC MOTORS
DISPOSITIF D'ENTRAÎNEMENT POUR ALIMENTER EN ÉNERGIE DES MOTEURS ÉLECTRIQUES FORTEMENT CHARGÉS

(30) Priorität: 09.02.2017 DE 102017001203
(43) Veröffentlichungstag der Anmeldung: 18.12.2019
(73) Patentinhaber: Hydac International GmbH, 66280 Sulzbach/Saar (DE)
(72) Erfinder: FELD, Daniel, 66271 Kleinblittersdorf (DE); MEYER, Jörg, 77749 Hohberg (DE); KESSLER, Markus, 66121 Saarbrücken (DE)
(74) Vertreter: Bartels und Partner, Patentanwälte
(86) Internationale Anmeldenummer: PCT/EP2018/053205
(87) Internationale Veröffentlichungsnummer: WO 2018/146208

(56) Entgegenhaltungen:
- EP-A1- 1 770 852
- EP-B1- 1 470 014
- DE-A1- 3 812 312
- DE-A1-102011 002 967
- DE-U1-202006 000 664
- US-A1- 2015 180 281

## Beschreibung

Die Erfindung betrifft eine Antriebseinrichtung zur Energieversorgung hochbelasteter Elektromotoren, mit den Merkmalen im Oberbegriff des Anspruchs 1.

Antriebseinrichtungen dieser Art sind Stand der Technik und kommen insbesondere für den Betrieb von maschinellen Einrichtungen zum Einsatz, bei denen die betreffenden Elektromotoren an ortsveränderlichen Stellen oder in unterschiedlichen Geländebereichen zu versorgen sind. Beispiele für bevorzugte Einsatzgebiete sind die Antriebe von Steinbrechern, Förderbandanlagen, Tunnelbohrmaschinen, Siebanlagen, Seilbahnen oder dergleichen. Wenn bei solchen Anlagen hochbelastete Elektromotoren bei Startvorgängen gegen Last anlaufen müssen, sind für die Startvorgänge sehr hohe, vom Generator zu liefernde Ströme notwendig. Um Betriebssicherheit zu erreichen, ist man daher gezwungen, die betreffende, den Generator antreibende Verbrennungskraftmaschine so auszulegen, dass sie die Spitzenlast, die nur für kurze Zeit beim Starten entsteht, sicher abdeckt. Da diese Spitzenlast die normale, an die Verbrennungskraftmaschine zu stellende Leistungsanforderung um den Faktor 3 bis 5 übersteigt, resultiert eine ungünstige Überdimensionierung der Verbrennungskraftmaschine, weil beispielsweise für einen 160 kW-Elektromotor eine Verbrennungskraftmaschine, die 500 kW leistet, eingesetzt wird, die im Dauerbetrieb nach dem Startvorgang dann lediglich im Teillastbetrieb arbeitet.

Die EP 1 770 852 A1 offenbart eine Antriebseinrichtung zur Energieversorgung hochbelasteter Elektromotoren, mit einem Elektromotor und einem den betreffenden Elektromotor über mindestens eine Leitung versorgenden Generator, der durch eine Verbrennungskraftmaschine über eine mechanische Kopplung mittels einer Welle antreibbar ist.

Die US 2015/0180281 A1, DE 20 2006 000 664 U1, DE 10 2011 002 967 A1 und die EP 1 470 014 B1 beschreiben weitere Antriebseinrichtungen.

Im Hinblick auf diese Problematik liegt der Erfindung die Aufgabe zugrunde, eine Antriebseinrichtung der eingangs genannten Art zur Verfügung zu stellen, die sich bei verringerten Anlagekosten durch ein günstiges und sicheres Betriebsverhalten auszeichnet.

Erfindungsgemäß ist diese Aufgabe durch eine Antriebseinrichtung gelöst, die die Merkmale des Patentanspruches 1 in seiner Gesamtheit aufweist.

Demgemäß bestehen wesentliche Besonderheiten der Erfindung darin, dass die Antriebseinrichtung ein hydraulisches Hybridsystem aufweist, das zumindest einen Hydrospeicher und eine mit der Welle des Generators über eine Pumpenwelle einer Verstell-Motorpumpeneinheit mechanisch kuppelbare Verbindung aufweist, mittels deren im Pumpbetrieb hydraulische Energie im Speicher speicherbar ist, die im Motorbetrieb der Verstell-Pumpen-Motoreinheit als zusätzliche Antriebsleistung des Generators nutzbar ist, die als Zweiquadranteneinheit von dem Motorbetrieb in den Pumpenbetrieb und umgekehrt durchschwenkbar ist und dass der Generator ausschließlich im Generatorbetrieb betrieben ist, dessen Generatorleistung auf den Wert Null zurückfahrbar ist, dass das Hybridsystem als Hochdruck-Niederdruck-System ausgebildet ist, und dass die Motor-Pumpen-Einheit eine Saugseite und eine Druckseite aufweist, die ohne Zwischenschalten weiterer Ventilbaugruppen mit einer Ölseite des als hydropneumatischer Druckspeicher ausgebildeten Speichers verbunden ist.

Da das Hybridsystem bei hohen Leistungsanforderungen, wie dies beim Starten eines gegen Last anlaufenden Elektromotors der Fall ist, zusätzlich zur Verbrennungskraftmaschine Drehmoment zur Verfügung stellen und so den Generator stützen kann, kann die Verbrennungskraftmaschine entsprechend der Nennleistung des Elektromotors ausgelegt werden und braucht daher demgegenüber nicht um ein Mehrfaches überdimensioniert zu sein, um eine stabile Stromversorgung des Elektromotors sicherzustellen. Ferner sind die Verlustleistungen im Betrieb der Antriebseinrichtung gering.

Ein weiterer, besonderer Vorteil des hydraulischen Hybridsystems besteht auch darin, dass es bei Bedarf als Booster aktivierbar ist, der im laufenden Betrieb auftretende Lastspitzen abfängt. Somit ist auch bei Einsatz der Antriebseinrichtung bei maschinellen Anlagen, bei denen während des Betriebs Lastspitzen auftreten können, beispielsweise bei Anlagen wie Steinbrechern oder Mühlen, eine stabile Stromversorgung des Elektromotors ohne Überdimensionierung der Verbrennungskraftmaschine sichergestellt.

Insbesondere bei größeren maschinellen Anlagen mit einem Elektromotor hoher Leistung, beispielsweise im Bereich von mehr als 150 kW ist vorzugsweise ein Dieselmotor als Verbrennungskraftmaschine vorgesehen.

Das hydraulische Hybridsystem kann als offenes System ausgebildet sein, wobei die Saugseite der Motor-Pumpen-Einheit mit einem Hydrauliköl bevorratenden Tank verbunden ist.

Alternativ kann das hydraulische Hybridsystem als Hochdruck-Niederdruck-System ausgebildet sein, wobei die Saugseite der Motor-Pumpen-Einheit mit der Ölseite eines hydropneumatischen Niederdruckspeichers verbunden ist, der die im Motorbetrieb und im Pumpbetrieb jeweils benötigten Volumenströme sicherstellt. Als hydropneumatische Speicher können Blasenspeicher, Kolbenspeicher oder Membranspeicher zum Einsatz kommen.

Eine besonders kompakte Bauweise ist realisierbar, wenn ein Doppelkolbenspeicher mit seiner Hochdruckseite den Energie speichernden Teil des Hybridsystems bildet und mit seiner Niederdruckseite den Volumenstrom für die Saugseite der Motor-Pumpen-Einheit zur Verfügung stellt.

Für eine zusätzliche Unterstützung der Saugseite der Motor-Pumpen-Einheit und zum Leckage-Ausgleich kann bei sämtlichen Ausführungsbeispielen eine zusätzliche Speisepumpe oder ein weiterer Hydrospeicher zur Bereitstellung benötigter Volumenströme mit der Saugseite der Motor-Pumpen-Einheit verbunden sein.

Für die Betriebssteuerung der Antriebseinrichtung kann ein an der Ölseite des jeweiligen Hochdruckspeichers angeschlossener Drucksensor ein elektrisches Drucksignal für eine Steuereinheit liefern, mittels deren der Schwenkwinkel der Motor-Pumpen-Einheit steuerbar ist. Vor Einleitung von Startvorgängen und während des laufenden Betriebs ist dadurch der Hochdruckspeicher auf einen Ladedruck einstellbar, bei dem sowohl für Startvorgänge als auch zum Boosten bei Lastspitzen im Betrieb aus dem Hochdruckspeicher die erforderliche, kompensierende Energie speicherbar ist. Dabei kann der Steuereinheit ein die Last des Generators darstellendes Signal zuführbar sein, das beispielsweise mittels eines Drehmomentsensors generierbar ist.

Nachstehend ist die Erfindung anhand von in der Zeichnung dargestellten Ausführungsbeispielen im Einzelnen erläutert. Es zeigen:
- Fig. 1: eine Symboldarstellung der Komponenten eines Ausführungsbeispieles der erfindungsgemäßen Antriebseinrichtung; und
- Fig. 2 und 3: der Fig. 1 entsprechende Symboldarstellungen eines zweiten bzw. eines dritten Ausführungsbeispieles der erfindungsgemäßen Antriebseinrichtung.

In den Figuren ist ein Drehstromgenerator mit 2 bezeichnet, der über eine Leitung 4 mit einem zu versorgenden, in die Figuren nicht dargestellten hochbelasteten Elektromotor vorgesehen ist, der für den Betrieb größerer maschineller Anlagen auf eine hohe Nennleistung ausgelegt sein kann, beispielsweise für eine Nennleistung von mehr als 150 kW. Als Antriebsquelle für den Generator 2 ist bei den vorliegenden Ausführungsbeispielen eine Verbrennungskraftmaschine in Form eines Dieselmotors 6 vorgesehen, der einen Direktantrieb für die Welle 8 des Generators 2 liefert. Die Generatorwelle 8 ist außerdem über eine Kupplung 10 mit der Welle 12 einer Verstell-Motor-Pumpen-Einheit 14 kuppelbar, die als Zweiquadranteneinheit ausgebildet ist, so dass ihr Schwenkwinkel zwischen Pumpbetrieb und Motorbetrieb durchschwenkbar ist. Die Motor-Pumpen-Einheit bildet in Zusammenwirkung mit einer Speichereinrichtung für hydraulische Energie ein hydraulisches Hybridsystem, das durch Energierückgewinnung eine den Dieselmotor 6 unterstützende Antriebsleitung zur Verfügung stellen kann.

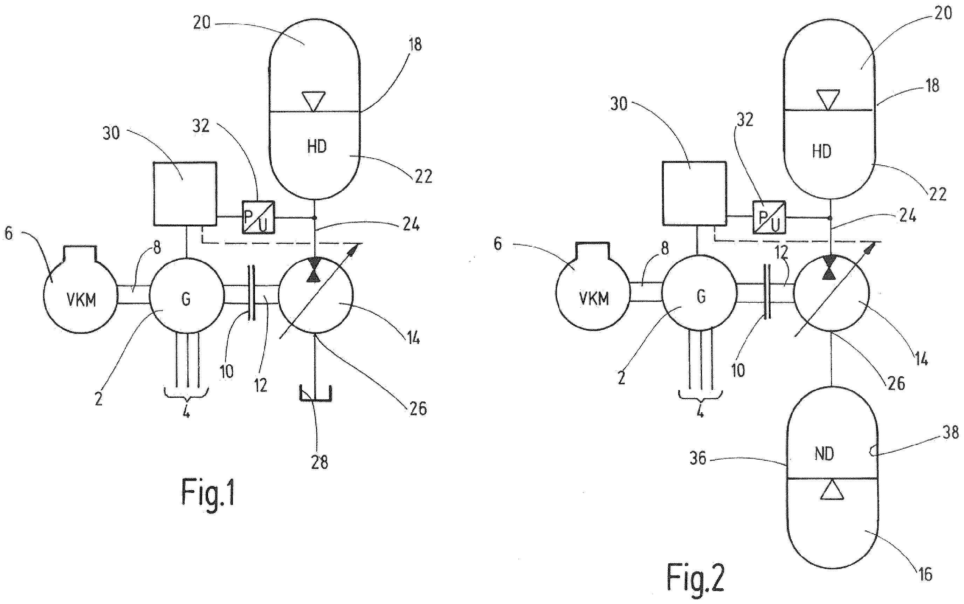

Bei dem Ausführungsbeispiel von Fig. 1 ist das hydraulische Hybridsystem als offenes System ausgelegt, mit einem als Energiespeicher dienenden Hochdruckspeicher in Form eines hydropneumatischen Druckspeichers 18, dessen Gasseite 20 mit einem Arbeitsgas, wie N₂, vorgespannt ist und dessen Ölseite 22 über eine Druckleitung 24 mit der Motor-Pumpen-Einheit 14 verbunden ist, deren Saugseite 26 bei dem in Fig. 1 gezeigten offenen System wiederum mit einem die Hydraulikflüssigkeit bevorratenden Tank 28 in Verbindung ist. Für die Betriebssteuerung durch Einstellung des Schwenkwinkels der Motor-Pumpen-Einheit 14 ist eine elektronische Steuereinheit 30 vorgesehen, die dem Stand der Technik entsprechend für den jeweiligen Einsatzfall anwendungsspezifisch programmiert ist und über einen an der Druckleitung 24 angeschlossenen Drucksensor 32 ein den Ladezustand des Speichers 18 darstellendes elektrisches Signal erhält. Als zusätzliches Steuersignal steht der Steuereinheit 30 ein die Last des Generators 2 darstellendes elektrisches Signal zur Verfügung, das beispielsweise durch einen der Generatorwelle 8 zugeordneten Drehmomentsensor oder abtriebsseitig generiert ist. Das bedeutet, dass die Last durch die Messung von Strom und Spannung an Pos. 4 ermittelt wird, was in jeden Frequenzumrichter integriert ist. Bei dieser Ausbildung des Hybridsystems ist die Motor-Pumpen-Einheit 14 durch Schwenkwinkeleinstellung derart betreibbar, dass vor dem Einleiten eines Startvorganges, jedoch bei bereits laufendem Dieselmotor 6 die Motor-Pumpen-Einheit 14 den Hochdruckspeicher 18 auf den Ladezustand auflädt, bei dem die für den Startvorgang benötigte Zusatzenergie bei Motorbetrieb der Motor-Pumpen-Einheit 14 rückgewinnbar oder einspeisbar ist. Im laufenden Betrieb wird durch entsprechende Schwenkwinkelsteuerung der gewünschte Ladedruck beibehalten, um ein eventuelles Boosten des Antriebs zu ermöglichen.

Die Fig. 2 zeigt ein Ausführungsbeispiel, dessen Funktionsweise dem Beispiel von Fig. 1 entspricht, wobei jedoch das Hybridsystem als geschlossenes System, wobei jedoch das Hybridsystem als Hochdruck-Niederdruck-System ausgebildet ist, wobei die Saugseite 26 der Motor-Pumpen-Einheit 14 mit einem Niederdruckspeicher 36 in Verbindung ist, dessen Ölseite 38 den Volumenstrom für das Arbeitsspiel des Hybridsystems zur Verfügung stellt, wobei die Motor-Pumpen-Einheit 14 bei Pumpbetrieb oder Motorbetrieb in der einen oder anderen Richtung durchströmt ist.

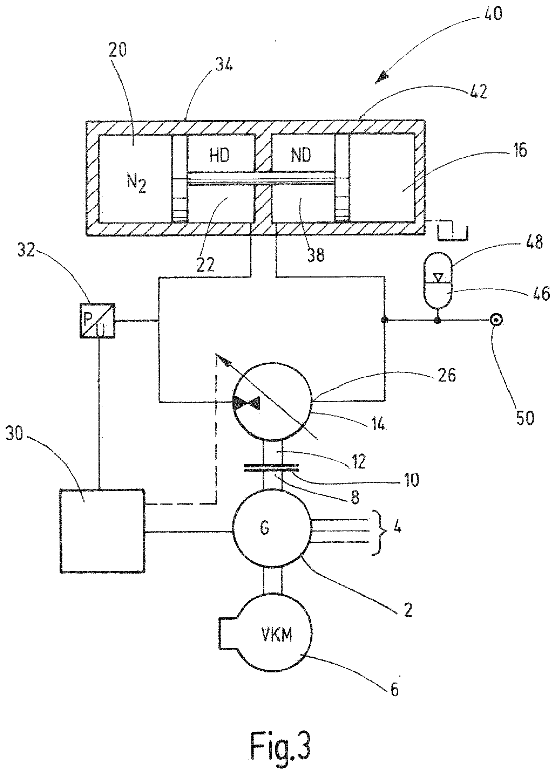

Das in Fig. 3 dargestellte dritte Ausführungsbeispiel ist, wie das Beispiel von Fig. 2, ebenfalls als geschlossenes System mit Leckageausgleich ausgebildet, wobei jedoch der den Hochdruckspeicher bildende Druckspeicher 18 der zuvor beschriebenen Beispiele durch die Hochdruckseite 34 eines Doppelkolbenspeichers 40 ersetzt ist, dessen Niederdruckseite 42 den Niederdruckspeicher 38 des Beispiels von Fig. 2 ersetzt. Wie bei den zuvor beschriebenen Beispielen ist die Ölseite 22 der Hochdruckseite 34 mit der Motor-Pumpen-Einheit 14 in Verbindung, deren Saugseite 26 mit der Ölseite 38 der Niederdruckseite 42 des Doppelkolbenspeichers 40 in Verbindung ist. Während die Gasseite 20 des Hochdrucktei0les 34 mit einem Arbeitsgas, wie N₂ vorgespannt ist, führt die Gasseite 16 des Niederdruckteils 42 den Atmosphärendruck. Die Konstantdruckquelle 50 sorgt für ein konstantes Druckniveau auf der Saugseite, z.B. 10 - 20 bar. Zusätzlich ist die Saugseite 26 durch einen mit seiner Ölseite 46 daran angeschlossenen kleinen Hydrospeicher 48 unterstützt, an den auch ein Ölanschluss 50 für Befüllen und Entleeren des Systems angeschlossen ist. Im Übrigen entspricht die Funktionsweise dem zuvor beschriebenen Beispiel von Fig. 2. Bei sämtlichen Ausführungsbeispielen kann auch eine zusätzliche Speisepumpe für den Leckageausgleich vorgesehen sein.

## Patentansprüche

1. Antriebseinrichtung zur Energieversorgung hochbelasteter Elektromotoren, mit einem Elektromotor und einem den betreffenden Elektromotor über mindestens eine Leitung (4) versorgenden Generator (2), der durch eine Verbrennungskraftmaschine (6) über eine mechanische Kopplung mittels einer Welle (8) antreibbar ist, **dadurch gekennzeichnet, dass** sie ein hydraulisches Hybridsystem aufweist, das zumindest einen Hydrospeicher (18; 40) und eine mit der Welle (8) des Generators (2) über eine Pumpenwelle (12) einer Verstell-Motor-Pumpeneinheit (14) mechanisch kuppelbare Verbindung aufweist, mittels deren im Pumpbetrieb hydraulische Energie im Speicher (18; 40) speicherbar ist, die im Motorbetrieb der Verstell-Motor-Pumpeneinheit (14) als zusätzliche Antriebsleistung des Generators (2) nutzbar ist, die als Zweiquadranteneinheit von dem Motorbetrieb in den Pumpbetrieb und umgekehrt durchschwenkbar ist und dass der Generator (2) ausschließlich im Generatorbetrieb betrieben ist, dessen Generatorleistung auf den Wert Null zurückfahrbar ist, dass das Hybridsystem als Hochdruck-Niederdruck-System ausgebildet ist, und dass die Motor-Pumpen-Einheit (14) eine Saugseite (26) und eine Druckseite aufweist, die ohne Zwischenschalten weiterer Ventilbaugruppen mit einer Ölseite (22) des als hydropneumatischer Druckspeicher ausgebildeten Speichers (18; 40) verbunden ist.

2. Antriebseinrichtung nach Anspruch 1, **dadurch gekennzeichnet, dass** sie für einen Elektromotor hoher Leistung, insbesondere im Bereich von mehr als 18 kW, als Verbrennungskraftmaschine einen Dieselmotor (6) aufweist.

3. Antriebseinrichtung nach Anspruch 1 oder 2, **dadurch gekennzeichnet, dass** das Hybridsystem als offenes System ausgebildet ist und die Saugseite (26) der Motor-Pumpen-Einheit (14) mit einem Hydrauliköl bevorratenden Tank (28) verbunden ist.

4. Antriebseinrichtung nach einem der vorstehenden Ansprüche,
**dadurch gekennzeichnet, dass** das Hybridsystem als Hochdruck-Niederdruck-System ausgebildet ist und die Saugseite (26) der Motor-Pumpen-Einheit (14) mit der Ölseite (16; 38) eines hydropneumatischen Niederdruckspeichers (36; 42) verbunden ist.

5. Antriebseinrichtung nach einem der vorstehenden Ansprüche,
**dadurch gekennzeichnet, dass** ein Doppelkolben-Speicher (40) mit seiner Hochdruckseite (34) den die rückgewinnbare Energie speichernden Teil des Hybridsystems bildet und mit seiner Niederdruckseite (42) den Volumenstrom für die Saugseite (26) der Motor-Pumpen-Einheit (14) zur Verfügung stellt.

6. Antriebseinrichtung nach einem der vorstehenden Ansprüche,
**dadurch gekennzeichnet, dass** mit der Saugseite (26) der Motor-Pumpen-Einheit (14) eine zusätzliche Speisepumpe oder ein weiterer Hydrospeicher (48) zur Bereitstellung benötigter Volumenströme verbunden ist.

7. Antriebseinrichtung nach einem der vorstehenden Ansprüche,
**dadurch gekennzeichnet, dass** ein an der Ölseite (22) des jeweiligen Hochdruckspeichers (18; 34) angeschlossener Drucksensor (32) ein elektrisches Drucksignal einer Steuereinheit (30) liefert, mittels deren der Schwenkwinkel der Motor-Pumpen-Einheit (14) steuerbar ist.

8. Antriebseinrichtung nach Anspruch 7, **dadurch gekennzeichnet, dass** der Steuereinheit (30) ein die Last des Generators (2) darstellendes Signal zuführbar ist, der über mechanische Kopplungen, insbesondere in Form der Welle (8), der Pumpenwelle (12) sowie einer Kupplung (10) zwischen Welle (8) und Pumpenwelle (12) zwischen die Verbrennungskraftmaschine (6), insbesondere in Form eines Dieselmotorantriebes und der Verstell-Motor-Pumpeneinheit (14) geschaltet ist.

9. Antriebseinrichtung nach Anspruch 7 oder 8, **dadurch gekennzeichnet, dass** der Steuereinheit (30) ein die abtriebsseitige Last, beispielsweise in Form eines E-Motors, darstellendes Signal zuführbar ist.

## Claims

1. Drive device for the power supply of highly-loaded electric motors, having an electric motor and a generator (2) which supplies the relevant electric motor via at least one line (4), it being possible to drive said generator by an internal combustion engine (6) via a mechanical coupling by means of a shaft (8), **characterised in that** the drive device has a hydraulic hybrid system which comprises at least one hydraulic accumulator (18; 40) and a connection which can be mechanically coupled to the shaft (8) of the generator (2) via a pump shaft (12) of a servomotor/pump unit (14), by means of which connection hydraulic energy can be stored in the accumulator (18; 40) during pump operation, which energy can be used as additional drive power of the generator (2) during motor operation of the servomotor/pump unit (14) which, as a two-quadrant unit, can be pivoted from motor operation to pump operation and vice versa, and **in that** the generator (2) is operated exclusively in generator mode, the generator power of which can be reduced to the value zero, **in that** the hybrid system is configured as a high-pressure/low-pressure system, and **in that** the motor/pump unit (14) has an intake side (26) and a pressure side which is connected to an oil side (22) of the accumulator (18; 40), which is configured as a hydropneumatic pressure accumulator, without the interposition of further valve assemblies.

2. Drive device according to claim 1, **characterised in that** it has a diesel engine (6) as the internal combustion engine for a high-power electric motor, in particular in the range of more than 18 kW.

3. Drive device according to claim 1 or 2, **characterised in that** the hybrid system is configured as an open system and the intake side (26) of the motor/pump unit (14) is connected to a tank (28) which stores hydraulic oil.

4. Drive device according to one of the preceding claims, **characterised in that** the hybrid system is configured as a high-pressure/low-pressure system and the intake side (26) of the motor/pump unit (14) is connected to the oil side (16; 38) of a hydropneumatic low-pressure accumulator (36; 42).

5. Drive device according to one of the preceding claims, **characterised in that** a double-piston accumulator (40) with its high-pressure side (34) forms the part of the hybrid system which stores the recoverable energy and with its low-pressure side (42) provides the volume flow for the intake side (26) of the motor/pump unit (14).

6. Drive device according to one of the preceding claims, **characterised in that** an additional feed pump or a further hydraulic accumulator (48) is connected to the intake side (26) of the motor/pump unit (14) for providing required volume flows.

7. Drive device according to one of the preceding claims, **characterised in that** a pressure sensor (32) connected to the oil side (22) of the respective high-pressure accumulator (18; 34) supplies an electrical pressure signal to a control unit (30), by means of which the pivot angle of the motor/pump unit (14) can be controlled.

8. Drive device according to claim 7, **characterised in that** a signal representing the load of the generator (2) can be fed to the control unit (30), which is connected between the internal combustion engine (6), in particular in the form of a diesel engine drive, and the servomotor/pump unit (14) via mechanical couplings, in particular in the form of the shaft (8), the pump shaft (12) and a coupling (10) between the shaft (8) and the pump shaft (12).

9. Drive device according to claim 7 or 8, **characterised in that** a signal representing the output-side load, for example in the form of an electric motor, can be fed to the control unit (30).

## Revendications

1. Dispositif d'entraînement pour alimenter en énergie des moteurs électriques fortement chargés, comprenant un moteur électrique et un générateur (2), qui alimente le moteur électrique concerné par au moins une ligne (4) et qui peut être entraîné par une machine (6) à combustion interne par un accouplement mécanique au moyen d'un arbre (8), **caractérisé en ce qu'**il a un système hydraulique hybride, qui a au moins un accumulateur (18 ; 40) hydraulique et une liaison pouvant être accouplée mécaniquement à l'arbre (8) du générateur (2) par un arbre (12) de pompe d'une unité (14) de moteur-pompe de réglage, liaison au moyen de laquelle, lors du fonctionnement en pompe, peut être accumulée dans l'accumulateur (18 ; 40) de l'énergie hydraulique, qui peut être utilisée dans le fonctionnement en moteur de l'unité (14) de moteur-pompe de réglage comme puissance d'entraînement supplémentaire du générateur (2) qui, comme unité à deux cadrans, peut pivoter du fonctionnement en moteur au fonctionnement en pompe et inversement et **en ce que** le générateur (2) fonctionne exclusivement en fonctionnement en générateur, dont la puissance peut être ramenée à la valeur zéro, **en ce que** le système hybride est constitué sous la forme d'un système haute pression - basse pression, et **en ce que** l'unité (14) de moteur-pompe a un côté (26) d'aspiration et un côté de refoulement, qui communique, sans interposition d'autres modules de vanne, avec un côté (22) d'huile de l'accumulateur (18 ; 40) constitué sous la forme d'un accumulateur de pression hydropneumatique.

2. Dispositif d'entraînement suivant la revendication 1, **caractérisé en ce qu'**il a, pour un moteur électrique de grande puissance, notamment dans la plage de plus de 18 kW, un moteur (6) diesel comme machine à combustion interne.

3. Dispositif d'entraînement suivant la revendication 1 ou 2, **caractérisé en ce que** le système hybride est constitué sous la forme d'un système ouvert et le côté (26) d'aspiration de l'unité (14) de moteur-pompe communique avec un réservoir (28) de réserve d'huile hydraulique.

4. Dispositif d'entraînement suivant l'une des revendications précédentes, **caractérisé en ce que** le système hybride est constitué sous la forme d'un système haute pression - basse pression et le côté (26) d'aspiration de l'unité (14) de moteur-pompe communique avec le côté (16 ; 38) d'huile d'un accumulateur (36 ; 42) basse pression hydropneumatique.

5. Dispositif d'entraînement suivant l'une des revendications précédentes, **caractérisé en ce qu'**un accumulateur (40) à double piston forme, par son côté (34) de haute pression, la partie d'accumulation d'énergie récupérable du système hybride et, par son côté (42) basse pression, met à disposition le courant en volume pour le côté (26) d'aspiration de l'unité (14) de moteur-pompe.

6. Dispositif d'entraînement suivant l'une des revendications précédentes, **caractérisé en ce qu'**avec le côté (26) d'aspiration de l'unité (14) moteur-pompe communique une pompe d'alimentation supplémentaire ou un hydroaccumulateur (48) supplémentaire de mise à disposition de courants en volume nécessaire.

7. Dispositif d'entraînement suivant l'une des revendications précédentes, **caractérisé en ce qu'**un capteur (32) de pression, raccordé au côté (22) d'huile de l'accumulateur (18 ; 34) de haute pression respectif fournit un signal électrique de pression à une unité (30) de commande, au moyen de laquelle l'angle de pivotement de l'unité (14) de moteur-pompe peut être commandé.

8. Dispositif d'entraînement suivant la revendication 7, **caractérisé en ce qu'**il peut être envoyé à l'unité (30) de commande, un signal, qui représente la charge du générateur (2) qui, par l'intermédiaire d'accouplements mécaniques, notamment sous la forme de l'arbre (8), de l'arbre (12) de la pompe, ainsi qu'un accouplement (10) entre l'arbre (8) et l'arbre (12) de la pompe est monté entre la machine (6) à combustion interne, notamment sous la forme d'un entraînement par moteur diesel, et l'unité (14) de moteur-pompe de réglage.

9. Dispositif d'entraînement suivant la revendication 7 ou 8, **caractérisé en ce qu'**un signal représentant la charge du côté mené, par exemple sous la forme d'un moteur E, peut être envoyé à l'unité (30) de commande.
